# EUROPEAN PATENT SPECIFICATION

(11) **EP 0 420 826 B1**
(45) Date of publication and mention of the grant of the patent: **01.06.1994**
(21) Application number: 90830407.4
(22) Date of filing: 18.09.1990
(51) Int. Cl.: B62D 35/00

(54) **A system for reducing slipstream drag for high-performance motor cars**
Einrichtung zum Reduzieren des Luftwiderstandes von Hochleistungsfahrzeugen
Un système de réduction de la traînée aérodynamique pour véhicules à hautes performances

(30) Priority: 28.09.1989 IT 6781789
(43) Date of publication of application: 03.04.1991
(73) Proprietor: FIAT AUTO S.p.A., 10135 Torino (IT)
(72) Inventor: Cornacchia, Felice, I-10137 Torino (IT); Di Giusto, Nevio, I-10124 Torino (IT)
(74) Representative: Saconney, Piero

(56) References cited:
- BE-A- 687 039
- FR-A- 916 198
- US-A- 2 037 942
- PUBLICATION: "INGENIEURS DE L'AUTOMOBILE", nos. 2/3, 1977, pages 96-100; M.L.ROMANI: "En aérodynamique, on a des idées"

## Description

The subject of the present invention is a system for reducing drag for high-performance motor vehicles, particularly racing cars.

In particular, the invention relates to a system for reducing slipstreams drag by actively controlling the boundary layer flow in the regions of the motor vehicle body near its rail, in order to assure improved performance as well as greater freedom in the styling of the rear part of the car body.

The system according to the invention comprises at least a lateral aperture provided near the rear end of the car body and means for generating an air flow through said aperture.

US-A-2 037 942 discloses a motor vehicle of the type indicated above, comprising a substantially annular aperture near the rear end of the body, whereby it allows to discharge a uniform air flow from the aperture in order to reduce the resistance of the body.

The present invention is characterised by the features set forth in the characterising portion of the annexed claim.

This enables effective active control of the boundary layer flow to be achieved and also keeps the flow lines close to the sides of the car near its tail at high speeds, preventing the separation of the flow from the car body and thus reducing the slipstream drag with the result that the drag coefficient is decreased.

The invention will now be described in detail with reference to the appended drawings, provided purely by way of non-limiting example, in which:
Figure 1 is a partially-sectioned, schematic plan view of a racing car with a system for reducing slipstream drag according to the invention, and
Figure 2 shows the detail indicated by the arrow II of Figure 1, on an enlarged scale.

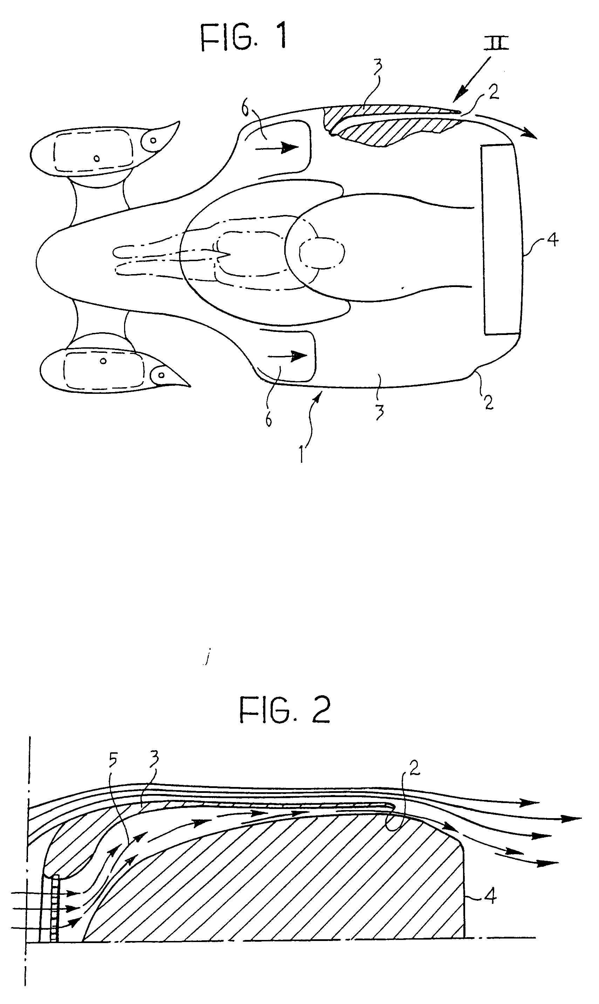

With reference to Figures 1 and 2, the body of a high-performance motor car, in particular a racing car is indicated 1 and is provided, in accordance with the invention, with lateral apertures 2 in the sides 3 of the body 1 near its rear end or tail 4.

The two apertures 2 communicate through respective ducts 5 with two front air intakes 6 for admitting air for cooling the car's engine.

The cooling air flow which enters the intakes 6 when the car is moving, emerges from the apertures 2 in the rear regions of the sides 3. As shown in greater detail in Figure 2, the arrangement of the apertures 2 is such that the emerging air flows pass tangentially over these regions of the sides 3 so as actively to control of the boundary layer flow, re-establishing a condition of substantially laminar flow against the surface of the body 1 and preventing the flow from separating from the surface of the body 1. This limits the width of the turbulent slipstream in the tail region 4 with the end result that the slipstream drag is reduced.

In the embodiment described above, use is made of the dynamic pressure produced by means of the cooling air intakes 6 to blow the air through the lateral apertures 2.

The system according to the invention enables the drag coefficient to be reduced by virtue of the reduced slipstream drag while at the same time providing ample freedom for the styling of the rear part of the car body 1.

## Claims

1. A system for reducing slipstream drag for high-performance motor cars, comprising at least a lateral aperture (2) provided near the rear end (4) of the car body (1) and means (6,) for generating an air flow through said aperture (2),
characterised in that the means (6) for generating the air flow comprise a pair of symmetrical convergent elongated ducts (5), each of said ducts (5) extending substantially longitudinally inside the body (1) along a respective side (3) of the body (1), between a respective front air intake (6) fed with air only by means of the ram effect, for admitting air for cooling the car engine, and an aperture (2) arranged to direct the air flow only tangentially of the respective side (3) of the car body (1).

## Patentansprüche

1. Einrichtung zum Verringern des Abströmwiderstands für Hochleistungskraftfahrzeuge, umfassend wenigstens eine nahe dem hinteren Ende (4) des Fahrzeugrumpfs (1) vorgesehene seitliche Öffnung (2) und Mittel (6) zum Erzeugen eines Luftstroms durch die Öffnung (2),
dadurch gekennzeichnet,
daß die Mittel (6) zum Erzeugen des Luftstroms ein Paar von symmetrischen, konvergierenden, langgestreckten Kanälen (5) umfassen, wobei jeder der Kanäle (5) sich im wesentlichen in Längsrichtung innerhalb des Rumpfs (1) entlang einer jeweiligen Seite (3) des Rumpfs (1) zwischen einem jeweiligen vorderen Lufteinlaß (6), welchem lediglich mittels der Auftreffwucht Luft zugeführt wird, um Luft zum Kühlen der Fahrzeugmaschine einzulassen, und einer Öffnung (2) erstreckt, die dazu eingerichtet ist, den Luftstrom lediglich tangential zu den jeweiligen Seiten (3) des Fahrzeugrumpfs (1) zu leiten.

## Revendications

1. Ensemble de réduction de la traînée due aux remous, destiné aux véhicules à moteur de hautes performances, comprenant au moins une ouverture latérale (2) placée près de l'extrémité arrière (4) de la carrosserie (1) du véhicule et un dispositif (6) destiné à créer un courant d'air s'écoulant par l'ouverture (2),
caractérisé en ce que le dispositif (6) destiné à créer le courant d'air comprend deux conduits convergents allongés et symétriques (5), chacun des conduits (5) étant disposé en direction pratiquement longitudinale à l'intérieur de la carrosserie (1) le long du côté respectif (3) de la carrosserie (1), entre une entrée avant respective (6) d'air recevant de l'air uniquement par l'effet de compression aérodynamique dû à l'admission d'air de refroidissement du moteur du véhicule, et une ouverture (2) disposée afin qu'elle dirige le courant d'air uniquement tangentiellement par rapport au côté respectif (3) de la carrosserie (1) du véhicule.
